# EUROPEAN PATENT APPLICATION

(11) **EP 4 667 109 A1**
(43) Date of publication of application: **24.12.2025**
(21) Application number: 24182487.9
(22) Date of filing: 17.06.2024
(51) Int. Cl.: B04B 1/04, B04B 7/08, F16J 15/34, B04B 11/02

(54) **CENTRIFUGAL SEPARATOR WITH SEAL ARRANGEMENT**

(71) Applicant: Alfa Laval Corporate AB, 221 00 Lund (SE)
(72) Inventor: CARLÉN, Vincent, SE-144 62 RÖNNINGE (SE)
(74) Representative: Alfa Laval Attorneys

(57) **Abstract**

A centrifugal separator (100) is disclosed, comprising a rotatable part (110), a stationary part (120), and a seal arrangement (201, 202). The rotatable part is configured to be rotated relative to the stationary part to separate a feed mixture into at least a first fraction and a second fraction. The seal arrangement comprises a rotatable sealing member (210) comprising a first sealing surface (212), and a stationary sealing member (220) comprising a second sealing surface (222). The first sealing surface and the second sealing surface face each other to form a sealing interface between the stationary part and the rotatable part. At least one of the first and second sealing surfaces is textured with a plurality of depressions (230) for reducing a friction in the sealing interface.

## Description

### Technical field

The present invention relates to separators, and more specifically to centrifugal separators comprising a sealing interface between a stationary part and a rotatable part of the separator.

### Background

Centrifugal separators are configured to divide feed mixtures into distinct fractions by separating components based on differences in density. This process may isolate liquids, gases, and solid particles, and can also segregate liquids and gases of varying densities.

To maintain the integrity of each separated fraction and prevent leakage, centrifugal separators are equipped with seal arrangements. The seal arrangements help prevent the intermixing of fractions and avoid leakage. Typically, this presents mechanical challenges, as the separators comprise both rotating and stationary components.

Dynamic seals are a type of seal designed to form a sealing interface between surfaces in relative motion. However, the relative rotational movement at this sealing interface can accelerate wear and tear on the seal, thus shortening its operational lifespan. Additionally, friction at the sealing interface generates heat, which not only risks the integrity of the seal by increasing the likelihood of failure and leaks but also contributes to the energy consumption of the centrifugal separator.

Given these challenges, there is a demand for improved technologies that reduce friction at the sealing interface.

### Summary

In view of the above, the present disclosure provides an improved or alternative technology having the features set out in the independent claims.

Hence, according to an aspect, there is provided a centrifugal separator comprising a stationary part, a rotatable part configured to be rotated relative to the stationary part and comprising a plurality of separation members for separating a feed mixture into at least a first fraction and a second fraction, and a seal arrangement. The seal arrangement comprises a rotatable sealing member having a first sealing surface, and a stationary sealing member having a second sealing surface. The first sealing surface and the second sealing surface face each other to form a sealing interface between the stationary part and the rotatable part, wherein the sealing interface provides a seal between a first zone and a second zone of the centrifugal separator. Furthermore, at least one of the first and second surfaces is textured with a plurality of depressions for reducing a friction in the sealing interface.

Traditionally, the design of sealing interfaces in centrifugal separators has prioritised achieving as planar and smooth sealing surfaces as possible. This conventional approach is guided by the principle that smoother surfaces ensure a tighter seal, effectively preventing any leakage while simultaneously reducing friction between the rotating and stationary parts of the separator. A smooth surface has been understood to minimise the potential for irregularities and debris to cause damage, which would otherwise lead to increased friction, accelerated wear, and eventual leaks.

However, recent insights by the inventor have challenged this traditional approach. In a somewhat counterintuitive discovery, it has been found that introducing a textured pattern on the sealing surfaces may enhance the separator's performance. More specifically, by embedding a pattern of depressions into at least one of these surfaces, a new dynamic may be introduced at the sealing interface.

While the underlying mechanisms are not fully understood, these depressions are believed to act as micro-reservoirs to trap air, creating a thin layer of air that effectively reduces direct contact between the sealing surfaces. This air layer may serve to lower friction and wear without compromising the integrity of the seal. Thus, contrary to traditional beliefs, a textured surface with deliberate depressions can reduce friction at the sealing interface more effectively than a perfectly smooth surface, all while maintaining a robust seal and preventing leaks.

The inventor has realised that this type of seal may be suitable for even for industrial-sized centrifugal separators, in which the seal needs to withstand large flows of liquid and high pressure, and at the same time have a long lifetime, such as up to thousands of hours.

The above aspect may not only improve the operational efficiency of centrifugal separators by extending the lifespan of the seals but also potentially reduces energy consumption due to lower friction levels.

The geometrical characteristics of the depressions may be engineered based on the operational parameters of the separator, such as the load exerted on the sealing interface and the rotational speed of the moving parts, as well as the types of material in the sealing surfaces.

The average maximum width of the depressions may range from 0.1 mm to 3.0 mm, such as 0.5 mm to 2 mm, or 1-1.2 mm. The average maximum width may be understood as the largest diameter of a circular or oval depression in the sealing surface, or the largest distance between two edges of the depression.

In some examples, an average minimum depth of the depressions is generally less than 40% of their maximum width, such as less than 30% or less than 20%. In some examples, the average minimum depth is generally at least 5% of their maximum width, such that at least 10%.

The coverage of the depressions in the first and/or second sealing surfaces may influence the performance of the sealing interface in terms of friction and integrity. In some examples, the depressions cover 5-50%, such as 10-40% of at least one of the first and second sealing surfaces. These ranges have been found to result in a reduction of the friction and the sealing interface.

The shape of the depressions may also be engineered to influence the friction in the sealing interface. Studies have identified that certain shapes, specifically footprints conforming to circles, ovals, and triangles may provide beneficial effects.

In a particular example, the first sealing surface is provided with spherical depressions (having a circular footprint) with an average depth of 0.03 mm and a circular footprint of 0.12 mm. Further, approximately 35% of the first sealing surface may be covered by the depressions. This configuration has been observed to reduce friction by approximately 30%.

In another example, the first sealing surface is provided with spherical depressions (having a circular footprint) with an average depth of 0.01 mm and a circular footprint of 1.1 mm. Approximately 13% of the first sealing surface may be covered by the depressions. This configuration has been observed to reduce friction by approximately 40%.

Furthermore, the distribution patterns of the depressions may affect the performance of the seal. By arranging the depressions along specific geometrical patterns such as circles or radial lines, the performance of the seal may be tailored to meet specific operational requirements.

In some examples, the depressions are distributed evenly across at least one of the first and second surfaces. In this pattern, the depressions may be uniformly spaced across the entire sealing surface. This could mean a grid-like arrangement or a stochastic (random but evenly distributed) pattern.

In some examples, the depressions are arranged in one or more circles, such as multiple concentric circles. This pattern aligns with the path of motion of the involved rotational parts and the circles may help distribute wear evenly along paths that are naturally stressed by rotational forces, potentially reducing uneven wear and extending the life of the seal.

In some examples, the depressions are arranged along lines extending radially from a rotational centre of the seal. This pattern may help direct lubricants or air along the radius. The radial lines may be combined with concentric circles for a more meshed distribution.

In some examples, the depressions are formed in the first sealing surface but not the second sealing surface. In other examples, the depressions are formed in the second sealing surface but not the first sealing surface. In further examples, the depressions may be formed in both surfaces, i.e., the first sealing surface and the second sealing surface. The decision on where to place the depressions, as well as which materials to use for the sealing surfaces, depends on the specific operational demands of the centrifugal separator, including factors like speed, temperature, load, and chemical exposure. Beneficially, the depressions may be formed in the harder of the two surfaces to reduce the risk of the texture wearing off during operation.

The first sealing surface may be formed of silicon carbide. Silicon carbide is known for its relatively high hardness, thermal conductivity, and resistance to wear and chemical corrosion. Silicon carbide may therefore be particularly suitable for high-performance applications involving high speeds and temperatures. Arranging the depressions on such a surface may help the depressions maintaining their shape and effectiveness over time.

In some examples, the silicon carbide surface is combined with a second sealing surface formed of carbon. Carbon has a lower hardness compared to silicon carbide, is less brittle and more compliant, making is effective at accommodating slight misalignments or surface irregularities at the sealing interface.

In some examples, both of the sealing surfaces may be formed of carbon.

In further examples, one or both of the sealing surfaces may be formed of a metal, such as stainless steel. Stainless steel typically exhibits a relatively high resistance to corrosion, making it suitable for use with feed mixtures comprising corrosive substances. It may also be a more cost-effective choice compared to silicon carbide, which is relatively expensive and energy consuming to produce.

At least one of the first and second sealing surfaces may comprise a cooling channel. Incorporating one or more cooling channels, such as grooves extending along the sealing surface or fluid connections passing through the body of the sealing member and opening into the sealing interface, may facilitate the flow of a cooling fluid directly to the sealing interface. This may help manage temperature and enhance the overall functionality of the seal. The grooves may be linear or spiral channels machined into one or both of the sealing surfaces.

The sealing interface may be arranged at various locations within the centrifugal separator to provide a seal either between different internal regions or zones, or between an internal region and the exterior of the separator. For instance, in one configuration, the first zone may be incorporated into the flow path of the feed mixture or the first fraction, while the second zone is fluidically connected to the exterior of the separator. In another configuration, the first zone is part of the flow path for the first fraction, and the second zone is part of the flow path for the second fraction. The seal arrangement may hence comprise one or more seals, such as an inlet seal at a feed mixture inlet and one or more outlet seals for handling the separated fractions.

In some examples, the rotatable part of the separator comprises a separator bowl forming a separation space that accommodates the plurality of separation members. These separation members may be arranged to co-rotate with the separator bowl. Depending on the specific application and type of separator, the separation members can be fixed in relation to the separator bowl, allowing them to rotate as a single unit.

The sealing interface may be arranged at an inlet of the separator bowl, and/or one or more outlets of the same. Thus, in one example, the separator bowl comprises an inlet for receiving the feed mixture and the stationary part a stationary conduit for supplying the feed mixture to the inlet, with the sealing interface arranged between the inlet and the stationary conduit.

In another example, the separator bowl comprises a first outlet for discharging the first fraction and a second outlet for discharging the second fraction. The stationary part may comprise a corresponding, first stationary outlet for receiving the first fraction from the bowl's first outlet and a second stationary outlet for receiving the second fraction from the bowl's second outlet. The sealing interface may then be arranged between the bowl's first outlet and the first stationary outlet, and/or between the bowl's second outlet and the second stationary outlet.

In some examples, the separation members are arranged to rotate around an axis of rotation to separate the feed mixture into the first fraction and the second fraction. In such a configuration, the seal arrangement may be concentric with the axis of rotation.

Further features and advantages of the invention will become apparent from the following description of embodiments, given by way of example only, which is made with reference to the accompanying drawings.

### Brief description of drawing

Various aspects and examples of the present disclosure will be readily understood from the embodiments discussed in the following detailed description and the accompanying drawings, in which:
Figure 1 is a schematic cross section of a centrifugal separator comprising a seal arrangement according to some examples.
Figure 2 is a cross section of a seal comprising a rotatable sealing member and a stationary sealing member, forming a sealing interface, according to some examples.
Figure 3A is a top view of a sealing member according to an example.
Figure 3B is a cross section of a portion of the sealing member in figure 3A.
Figure 3C is a top view of a sealing member according to another example.
Figures 4A-4C show examples of various patterns of depressions formed in a sealing surface.
Figure 5 is a top view of a portion of a textured sealing surface according to an example.

### Detailed description

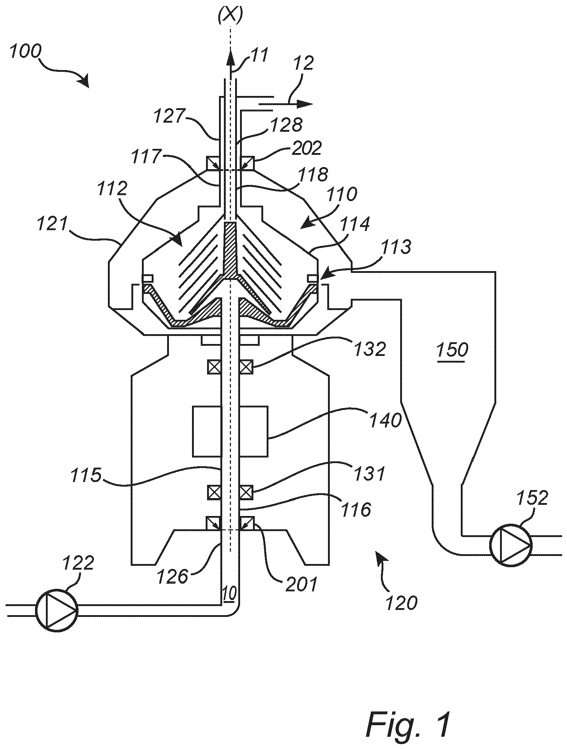

Figure 1 is a cross-section of a centrifugal separator 100 according to an embodiment of the invention. The centrifugal separator 100 is operable to separate different fractions, such as a liquid heavy phase and a liquid light phase, from a liquid feed mixture.

The centrifugal separator 100 comprises a rotatable part 110 and a stationary part 120, wherein the rotatable part 110 is configured to rotate relative to the stationary part 120. The rotatable part 110 comprises a separation space with a plurality of separation members 112 for separating a feed mixture into a first fraction and a second fraction. In the present example, the rotatable part 110 comprises a bowl, or centrifuge bowl 114, which is arranged to rotate around an axis of rotation X. During operation, the plurality of separation members 112, which in the present example comprises a stack of frustoconical separation discs, may co-rotate with the bowl 114 to separate the liquid feed mixture into the different fractions.

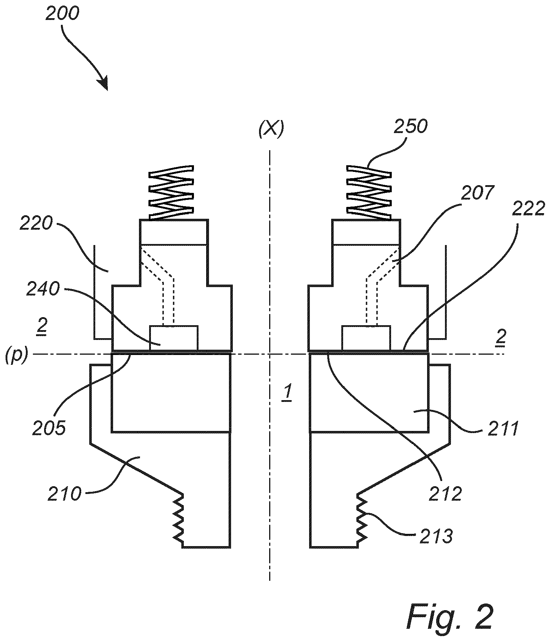

The liquid feed mixture may be supplied to the separation space via a flow path 10 passing through an interface between the stationary part 120 and the rotatable part 110. In the present example, the interface is arranged between the inlet of a hollow spindle 115, onto which the separator bowl 114 is attached, and a stationary conduit 126 through which the feed mixture is supplied. The interface between the rotatable and the stationary parts 110, 120 is sealed by a seal arrangement, in this example an inlet seal 201, comprising a stationary sealing member 220 attached to the stationary part 120 and a rotatable sealing member 210 attached to the rotatable part 110. As will be discussed in further detail in connection with figure 2, the rotatable sealing member 210 comprises a first sealing surface and the stationary sealing member a second sealing surface. The first sealing surface and the second sealing surface face each other to form a sealing interface between the rotatable part 110 and the stationary part 120. During operation, the rotatable sealing member and its sealing surface will rotate with the rotatable part 110, whereas the stationary sealing member and its sealing surface are stationary in relation to the rotatable sealing member. Thus, a rotating sealing interface, or dynamic seal, is formed to maintain integrity of the flow of liquid feed mixture and reduce the risk of leaks.

The separated fractions, such as the light phase and the heavy phase, may leave the separation space through one or more outlets 117, 118 of the rotatable part 110. One or more seal arrangements, such as an outlet seal 202, may be arranged to seal an interface between the stationary part 120 and the outlets 117, 118 of the rotatable part 110 of the centrifugal separator 100. In the example depicted in figure 1, the stationary part 120 comprises a first stationary outlet 127 for receiving a first fraction from a first outlet 117 of the rotatable part 110 and a second stationary outlet 128 for receiving a second fraction from a second outlet 118 of the rotatable part 110.

Similarly to the inlet seal 201, the outlet seal 202 may comprise one or more sealing surfaces that rotate with the rotatable part 110 and which form one or more sealing interfaces with corresponding sealing surfaces of the stationary part 120. One sealing interface may be arranged to provide a seal between the first fraction and the second fraction, while another sealing interface may be arranged to provide a seal between the second fraction and an exterior of the centrifugal separator. In the present figure, the first fraction flows along a flow path 11 formed in the first stationary outlet 127, whereas the second fraction flows along a flow path 12 formed in the second stationary outlet 128. The first stationary outlet 127 may form part of a first outlet conduit concentrically arranged within a second outlet conduit.

It will be appreciated that the depicted seal arrangement 201, 202 merely is an example, and that other or additional seals may be provided to maintain integrity of the liquid feed mixture and the different fractions and prevent leaks.

The centrifuge bowl 114 may further comprise a solid phase outlet 113 for discharging a separated solid phase that has accumulated in a sludge space located in a peripheral part of the separation space within the centrifuge bowl 114. The solid phase outlet 113 may take the form of a plurality of intermittently openable sludge outlets arranged at the outer periphery of the centrifuge bowl 114.

Discharge solid phase may be collected under a hood 121 that surrounds at least an upper portion of the centrifuge bowl 114 and further directed to a vessel 150. The vessel 150 may be provided in the form of a cyclone and thus arranged for collecting the separated solid phase discharged from the centrifuge bowl 114. The vessel 150 is further connected to a discharge device 152 in the form of a sludge pump for discharge of sludge and liquid present in the vessel 150.

The separator bowl 114, forming the rotatable part 110, may be mounted onto a spindle 115. The spindle 115 may be hollow to allow the liquid feed mixture to flow through the spindle 115 into the separation space and may further be supported by a bottom bearing 131 and a top bearing 132. A motor, such as an electric drive motor 140, may be provided to rotate the spindle 115 and the centrifuge bowl 114 around the axis of rotation X. The drive motor 130 may be connected directly to the spindle 115 or connected to the spindle 115 via a transmission means.

During operation of the separator in figure 1, the centrifuge bowl 114 is caused to rotate around the axis of rotation X by torque transmitted from the drive motor 140 to the spindle 115. Liquid feed mixture is supplied to the separation space via the stationary conduit 126 and the hollow spindle 115, using an inlet feed pump 122. Thus, the feed mixture is brought into the separation space within the centrifuge bowl 114 and further between the separation discs of the stack that is fitted in the separation space. A separated liquid light phase moves radially inwards between the separation discs and is discharge via the first outlet 117 to the first stationary outlet 127, whereas separated liquid heavy phase is discharged via the second outlet 118 to the second stationary outlet 128. Heavier components in the feed mixture, such as solid particles and/or heavy phase, move radially outwards between the separation discs and accumulate in the sludge space. The separated solid phase is emptied intermittently from the solid phase outlets 113 and collected at the vessel 150.

Figure 2 shows a schematic cross-section of a seal arrangement 200 according to an embodiment. The seal arrangement 200 may be configured similarly to the seal arrangement discussed in connection with figure 1, such as the inlet seal 201 or the outlet seal 202.

The seal arrangement 200 comprises a rotatable sealing member 210 and a stationary sealing member 220. The rotatable sealing member 210 and the stationary sealing member 220 are arranged to face each other such that their respective sealing surfaces 212, 221 form a sealing interface 205 between a first zone 1 and a second zone 2. The first zone 1 may, for example, correspond to the inlet flow path 10 of the feed mixture in figure 1 and the second zone 2 to the exterior of the separator 100. In other examples, the first zone 1 may correspond to the flow path 11 of the first fraction and the second zone 2 to the flow path 12 of the second fraction in figure 1. In the present example, the rotatable sealing member 210 may be attached to the rotatable part 110 of the separator 100, such as an inlet or an outlet of the centrifuge bowl in figure 1, while the stationary sealing member 220 may be attached to a stationary part 120 of the separator 100, such as the stationary conduit 126 or a stationary outlet 127, 128 shown in figure 1.

The rotatable sealing member 210 depicted in figure 2 comprises a first sealing ring, or wear ring 211, on which a first sealing surface 212 is arranged. Similarly, the stationary sealing member 220 comprises a second sealing ring 221, having a second sealing surface 222. The second sealing surface 222 is arranged to contact the first sealing surface 212 to form the sealing interface 205. The second sealing ring 221 may be biased towards the first sealing ring 211 by means of a spring 250 that pushes the second sealing ring 221 against the first sealing ring 221 along the axis of rotation X.

The first sealing ring 211, and hence the first sealing surface 212, may be formed of a silicon carbide whereas the second sealing ring 221 and the second sealing surface 222 may be formed of carbon. Other materials and combinations are however possible, including stainless steel.

The rotatable sealing member 210 is arranged to be fitted onto a rotatable part 110 of a centrifugal separator 100 by means of a threading 213, whereas the stationary sealing member 220 is configured to be fitted onto a stationary part 120 of the centrifugal separator 100 such that the seal assembly 200 forms a seal between the rotatable part 210 and the stationary part 220 of the separator 100. The rotatable sealing member 210 is thus arranged to rotate during operation, whereas the stationary sealing member 220 is arranged to be stationary during operation.

The sealing interface 205, formed between the sealing members 210, 220, may be arranged in a radial plane p extending substantially perpendicular to the axis of rotation X. The seal arrangement 200 may further form a seal between the first zone 1 and the second zone 2. The first zone 1 is arranged so that it extends axially through the sealing rings 211, 221, that is, at a radially inner position, whereas the second zone 2 is arranged radially outside the sealing rings 211, 221. However, the second zone 2 does not necessarily extend circumferentially around the whole periphery of the sealing rings 211, 221. In further examples, the seal may comprise one or more additional passages, which may be concentric with the flow channel formed by the first zone 1. An example of such a seal may be arranged at the outlets 117, 118 shown in figure 1.

The sealing members 210, 220 may be arranged so that a double contact seal is formed upon engagement between the sealing surfaces 212, 222 of the sealing members 210, 220. The double contact seal may be achieved by a channel 240, or chamber, formed as a recess in the second sealing surface 222. In the example shown in figure 2, the channel 240 forms an annular recess extending around an entire circumference of the second sealing surface 222. The channel 240 may be arranged to provide a flow of fluid to the sealing interface 205, which for example may be supplied through a fluid connection 207 extending through the body of the stationary sealing member 220. During operation, the fluid connection 207 may be employed to supply a fluid to the channel 250 at a pressure that is higher than a pressure of the fluid within e.g. the first zone 1, thereby decreasing the risk of fluid in the first zone 1 leaking radially outwards to the second zone 2. The fluid, which for example may be a liquid, may additionally be used for cooling the sealing interface 205 and/or as a lubricant reducing the friction at the sealing interface 205.

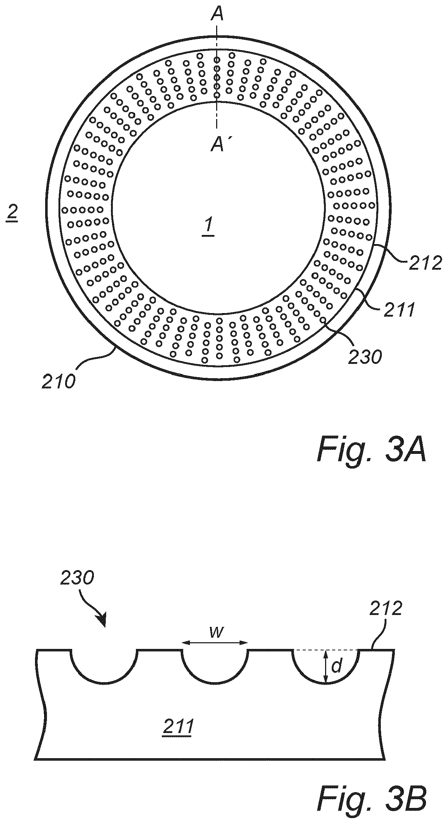

Figure 3A is a top view of a sealing member of a seal arrangement according to an embodiment of the invention, which may form part of a seal arrangement similar to the ones shown in figures 1 and 2. More specifically, the figure shows a sealing surface 212 of a sealing member 210, which is textured with a plurality of depressions 230. The depressions 230 may also be referred to as dimples, cavities, open cavities, indentations, recesses, or pores.

This particular example shows the sealing surface 212 of a sealing ring 211 of a rotatable sealing member 210, which may be attached to a rotatable part of a centrifugal separator. However, will be appreciated that the depicted sealing member also may be configured to be attached to a stationary part of the separator, similar to the stationary sealing member 220 discussed with reference to figures 1 and 2. The ring shape allows a flow of feed mixture or a separated fraction to pass through an interior of the ring, corresponding to zone 1 in figure 2, while the sealing interface forms a seal to the outside of the ring (corresponding to zone 2 in figure 2).

The sealing surface 212 is textured with a plurality of depressions 230 for reducing a friction in the sealing interface. The depressions are distributed along radial lines extending from the axis of rotation of the sealing member 210 and covering about 10-50% of the sealing surface 212, such as approximately 40%.

Figure 3B is a cross section of a portion of the sealing member 210 in figure 3A, taken along line A-A'. Figure 3B shows a cross section of depressions 230 distributed along a radial line coinciding with line A-A'. The depressions 230 have a footprint conforming to a circle, with an average maximum width (or diameter) w of 0.1-2.0 mm. In the present example, the depressions 230 have an average width w of 1.2 mm. Furthermore, the depressions 230 have an average depth d, as measured from the sealing surface 212 and along the axis of rotation, being 20% of the average width w or less. In the present example, the average depth d is 0.138 mm, or approximately 12% of the average width w.

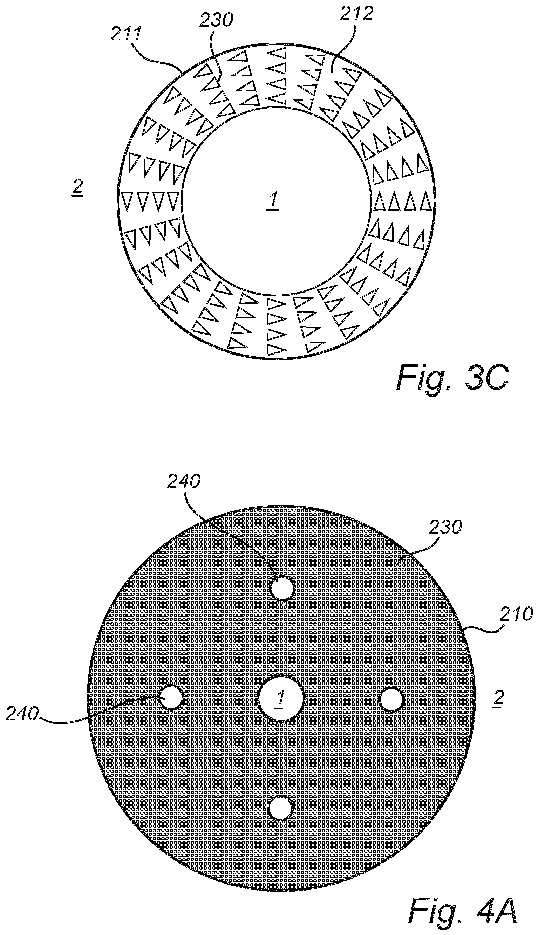

Figure 3C is a top view of a similar sealing member as shown in figures 3A and B, provided with a texture of triangular depressions 230 instead of circular ones. The sealing member comprises a ring-shaped sealing surface 212 formed by a sealing ring 211, defining a hollow interior 1 through which a flow of feed mixture or a separated fraction may flow. The triangular depressions 230 may be oriented such that a base is facing in the direction of rotation, or the other way around such that one of the corners is facing in the direction of rotation. In the present example, the depressions 230 are shaped such that their maximum width w, as measured from the base to the opposite vertex, is in the range of 0.1-2.0 mm. In figure 3C, this width is aligned with the direction of rotation of the sealing member 210.

The triangular depressions 230 are arranged in radial lines, or columns, extending from a centre of the sealing ring 211. Other patterns and orientations are however possible, as exemplified in figures 4A-C.

Figures 4A-C show various examples of sealing surfaces, such as the first and second sealing surfaces 212, 222 shown in figures 1 and 2 and exemplified in figures 3A-C. The depicted sealing surfaces may form part of a sealing member 210 defining a central flow path 1 and a sealing interface sealing the central flow path from an exterior zone 2. Furthermore, one or more channels 240 may be provided, which may extend through the body of the sealing member 210 in a similar manner as the fluid connection 207 in figure 2 to allow a flow of a fluid, such as a cooling liquid, to be supplied to the sealing interface.

The depressions 230 may have a circular, elliptical, or polygonal footprint as discussed above. In the examples shown in figures 4A-C, the sealing surfaces are textured with ball shaped, or hemispherical, depressions 230 distributed in various patterns. Each of the depressions 230 may have a width (diameter) w of approximately 1.1 mm and a depth of approximately 0.01 mm. When covering about 13% of the sealing surface, a friction reduction of about 40% may be expected.

Figure 4A shows an example of a regular grid, or matrix, pattern, in which the depressions 230 are placed in a substantially uniform, grid-like pattern along two orthogonal axes. The depressions 230 are distributed over the entire sealing surface to help evenly distribute stresses and maintain consistent lubrication across the sealing interface.

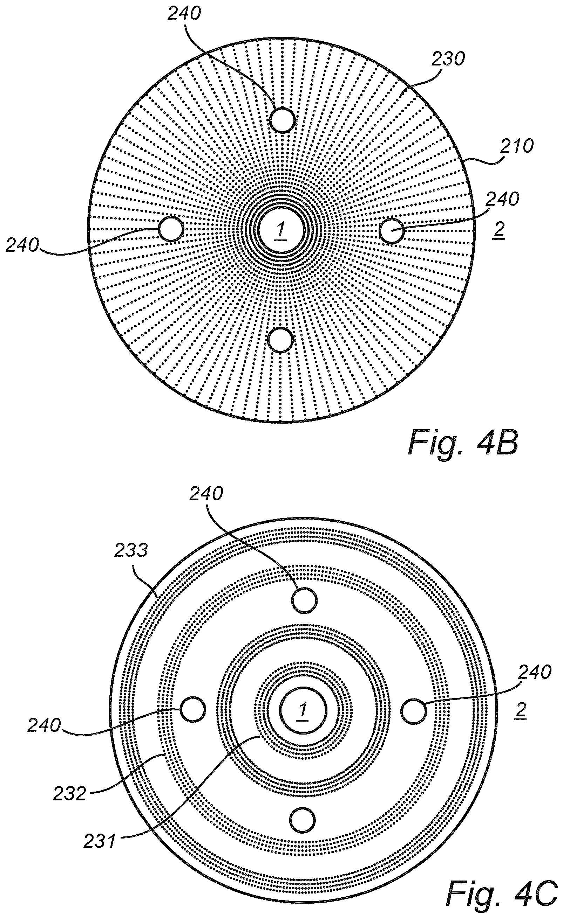

In figure 4B, the depressions 230 are arranged along lines that radiate outwards from the centre of the seal surface, similar to the spokes of a wheel. This pattern may allow for a natural flow of liquids such as lubricants from the centre outwards, which may be beneficial in rotary applications where centrifugal forces push liquids towards the periphery.

Figure 4C shows further example of a texture where depressions 230 are arranged in concentric circles centred around the axis of rotation. The depressions 230 are grouped into sets of circles, such as three circles illustrated in figure 4C, with each set forming a concentric ring separated by a smooth surface region. In this example, the first group 231 of circles is positioned closest to the centre, followed by a series of equidistant groups: the second group 232, and the third, outermost group 233 of circles.

Various methods can be used for forming the depressions 230. The choice of method may depend on the type of material used, the desired size and shape of the depressions, and the surface area to be textured.

Laser texturing is an example, which involves using a focussed laser beam to ablate material from the sealing surface. This process allows for high-resolution patterns and can be easily controlled for depth and shape, making it suitable for textures comprising hemispherical or triangular depressions.

Mechanical or electrochemical machining are other examples of methods that may be employed to form the depressions.

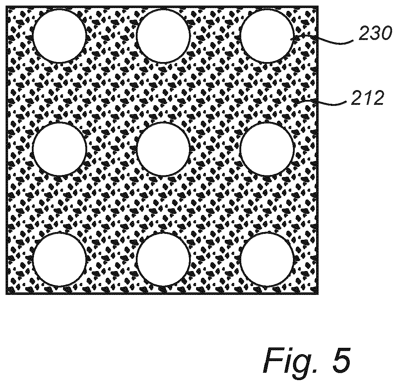

Figure 5 shows an example of a textured silicon carbide surface 212, which may form part of a sealing surface of a sealing member similar to any of the sealing members in the previous figures. The surface 212 may be laser-textured with a set of hemispherical depressions 230. The average initial width may, for example, be 0.12 mm, the average initial depth d approximately 0.030 mm, and the depression ratio (i.e., the ratio of the surface covered by the depressions) about 35%. Beneficially, the textured sealing surface may be polished to remove irregularities and protrusions from the surface, such as burr and recast layer formed by the laser texturing, leading to a slight elevation or roughness at the edge of the depression. The resulting surface structure, such as the example shown in figure 5, may have a depression width w of 0.090 mm, a depth of 0.025 mm, and a depression ratio of 20%. In some examples, the surface roughness may be approximately 0.02 µm.

Additionally, variations to the disclosed embodiments can be understood and effected by the skilled person in practising the claimed invention, from a study of the drawings, the disclosure, and the appended claims. Moreover, in the drawings and specification, there have been disclosed preferred embodiments and examples of the invention and, although specific terms are employed, they are used in a generic and descriptive sense only and not for the purpose of limitation. The scope of the invention is set forth in the following claims, in which the word 'comprising' does not exclude other elements or steps, and the indefinite article 'a' or 'an' does not exclude a plurality.

Furthermore, it should be noted that the disclosure is not limited to the orientation of the axis of rotation X disclosed in the figures. Other orientations are also possible. For example, the term `centrifugal separator' may also include centrifugal separators with a substantially horizontally oriented axis of rotation. Further, the terms 'stationary' and 'rotatable' may be understood as relative terms referring to the relative motion between two elements. Thus, the stationary sealing member may be understood as stationary in relation to the rotatable sealing member, rather than to an external reference point.

## Claims

1. A centrifugal separator (100), comprising:
a rotatable part (110) and a stationary part (120), wherein the rotatable part is configured to be rotated relative to the stationary part and comprises a plurality of separation members (122) for separating a feed mixture into at least a first fraction and a second fraction; and
a seal arrangement (201, 202) comprising:
a rotatable sealing member (210) comprising a first sealing surface (212), and
a stationary sealing member (220) comprising a second sealing surface (222);
wherein the first sealing surface and the second sealing surface face each other to form a sealing interface between the stationary part and the rotatable part, the sealing interface providing a seal between a first zone (1) and a second zone (2) of the centrifugal separator;
wherein at least one of the first and second sealing surfaces is textured with a plurality of depressions (230) for reducing a friction in the sealing interface.

2. The centrifugal separator according to claim 1, wherein the depressions have an average maximum width (w) of 0.1-3 mm, such as 0.5-2 mm, such as 1-1.2 mm.

3. The centrifugal separator according to claim 2, wherein an average maximum depth (d) of the depressions is less than 40% of the average maximum width, such as less than 30%, such as less than 20%.

4. The centrifugal separator according to any of the preceding claims, wherein the depressions cover 5-50% of said at least one of the first and second sealing surfaces, such as 10-40%.

5. The centrifugal separator according to any of the preceding claims, wherein a footprint of each of the depressions conforms to a circle, an oval, or a triangle.

6. The centrifugal separator according to any of the preceding claims, wherein the depressions are distributed:
evenly across said at least one of the first and second surfaces; or
along one or more concentric circles; or
along radial lines.

7. The centrifugal separator according to any of the preceding claims, wherein the depressions are formed in the first sealing surface.

8. The centrifugal separator according to claim 7, wherein the first sealing surface is formed of silicon carbide and the second sealing surface is formed of carbon.

9. The centrifugal separator according to any of the preceding claims, wherein at least one of the first and second sealing surfaces comprises a channel (240) for providing a flow of cooling fluid to the sealing interface.

10. The centrifugal separator according to any of the preceding claims, wherein the first zone forms part of a flow path (10) of the feed mixture or a flow path (11) of the first fraction, and wherein the second zone is fluidically connected to an exterior of the centrifugal separator.

11. The centrifugal separator according to any of claims 1-9, wherein the first zone forms part of a flow path of the first fraction and the second zone forms part of a flow path (12) of the second fraction.

12. The centrifugal separator according to any of the preceding claims, wherein the rotatable part comprises a separator bowl (124) accommodating the plurality of separation members, the plurality of separation members being arranged to co-rotate with the separator bowl.

13. The centrifugal separator according to claim 12, wherein:
the separator bowl comprises an inlet (126) for receiving the feed mixture;
the stationary part comprises a stationary conduit (116) for supplying the feed mixture to the inlet; and
the sealing interface is arranged between the inlet and the stationary conduit.

14. The centrifugal separator according to claim 12, wherein:
the separator bowl comprises a first outlet (117) for discharging the first fraction and a second outlet (118) for discharging the second fraction;
the stationary part comprises a first stationary outlet (127) for receiving the first fraction from the first outlet and a second stationary outlet (128) for receiving the second fraction from the second outlet; and
the sealing interface is arranged between the first outlet and the first stationary outlet, and/or the second outlet and the second stationary outlet.

15. The centrifugal separator according to any of the preceding claims, wherein the separation members are arranged to rotate around an axis of rotation (X) to separate the feed mixture into the first fraction and the second fraction, and wherein the seal arrangement is concentric with the axis of rotation.
